# EUROPÄISCHE PATENTSCHRIFT

(11) **EP 3 797 570 B1**
(45) Veröffentlichungstag und Bekanntmachung des Hinweises auf die Patenterteilung: **26.07.2023**
(21) Anmeldenummer: 20190914.0
(22) Anmeldetag: 13.08.2020
(51) Int. Cl.: A01B 79/00, A01B 76/00

(54) **VERFAHREN ZUR BODENKARTIERUNG**
METHOD FOR TERRAIN MAPPING
PROCÉDÉ DE CARTOGRAPHIE DES SOLS

(30) Priorität: 26.09.2019 DE 102019125896
(43) Veröffentlichungstag der Anmeldung: 31.03.2021
(73) Patentinhaber: 365FarmNet Group KGaA mbh & Co KG, 33428 Harsewinkel (DE)
(72) Erfinder: Krudewig, Karl-Heinz, 41334 Nettetal (DE)
(74) Vertreter: CLAAS Gruppe

(56) Entgegenhaltungen:
- EP-A1- 3 349 561
- EP-A2- 2 267 566
- US-A1- 2018 292 339
- US-B2- 6 834 550

## Beschreibung

Die Erfindung betrifft ein Verfahren zur Bodenkartierung einer landwirtschaftlich bewirtschafteten Fläche, wobei zunächst ein Startzustand einer Bodeneigenschaft ermittelt und dann ausgehend von dem Startzustand anhand einer Wirkung einer Bewirtschaftung der Fläche ein Istzustand der Bodeneigenschaft berechnet wird.

Im Rahmen eines solchen Verfahrens schlägt EP 2 267 566 A2 vor, eine Route für eine landwirtschaftliche Bewirtschaftung der Fläche durch eine fahrbare Maschine anhand der bestehenden gemessenen und der für die Maschine spezifischen prognostizierten Bodenverdichtung zu optimieren.

Der Erfindung liegt die Aufgabe zugrunde, die Bodenkartierung zu verbessern.

Ausgehend von dem bekannten Verfahren wird erfindungsgemäß vorgeschlagen, dass in mehreren vertikal übereinander angeordneten Horizonten der Fläche der Startzustand ermittelt und der Istzustand berechnet wird. Die Erfassung und Fortschreibung der Bodeneigenschaft in mehreren Horizonten vermittelt dem Nutzer ein tiefergehendes Verständnis der Wirkungen der Bewirtschaftung.

Vorzugsweise werden im Rahmen eines erfindungsgemäßen Verfahrens zum Ermitteln des Startzustands Startwerte der Bodeneigenschaft auf diskreten Stellen der Fläche gemessen, und der Startzustand zwischen den diskreten Stellen interpoliert und zwischen den diskreten Stellen und einem Rand der Fläche extrapoliert wird. Durch die Inter- und Extrapolation der gemessenen Werte werden Lücken zwischen gesicherten Werten der Bodeneigenschaft durch mutmaßlich sinnvolle Werte geschlossen und eine Bewertung der Bodeneigenschaft auch außerhalb der diskreten Stellen ermöglicht. Die Startwerte können insbesondere durch Einzelmessungen durch Begehung der Fläche oder aus auf der Fläche feststehenden Messstationen, durch Messfahrten während der Bewirtschaftung sowie durch Auswerten von Messungen aus Drohnen, Flugzeugen, Messballons oder aus Satelliten ermittelt werden.

Vorzugsweise wird im Rahmen eines erfindungsgemäßen Verfahrens während der Bewirtschaftung einer der diskreten Stellen die Wirkung für diese Stelle berechnet. Ein solches erfindungsgemäßes Verfahren erlaubt die Überwachung der Bodeneigenschaft während der Bearbeitung und bildet die Grundlage für eine begleitende Anpassung der Bewirtschaftung anhand der Entwicklung der Bodeneigenschaft.

Im Rahmen eines erfindungsgemäßen Verfahrens kann die Bodeneigenschaft eine Dichte des Bodens sein. Die Dichte des Bodens als ein wesentlicher Einflussfaktor für das Wachstum von Pflanzen auf dem Boden und für die Aufnahme und Abgabe von Feuchtigkeit wird in dem bekannten Verfahren für eine oberflächige Bodenschicht ermittelt und berechnet.

Im Rahmen eines erfindungsgemäßen Verfahrens kann die Bodeneigenschaft eine Feuchte des Bodens sein. Die Feuchte an der Oberfläche des Bodens und insbesondere in tieferen Horizonten ist ein wesentlicher Einflussfaktor für die Bestimmung eines Bewässerungs- und Beregnungsbedarfs.

Im Rahmen eines erfindungsgemäßen Verfahrens kann die Bodeneigenschaft eine Temperatur des Bodens sein. Die Bodentemperatur an der Oberfläche und in tieferen Horizonten beeinflusst wesentlich die Aufnahme und Abgabe von Feuchtigkeit sowie die Entwicklung von Schädlingen.

Im Rahmen eines erfindungsgemäßen Verfahrens kann die Bodeneigenschaft ein Geldwert des Bodens sein. Die Entwicklung eines Geldwerts erlaubt sowohl für jede Stelle als auch für die Fläche insgesamt eine Bewertung der Rentabilität der Bewirtschaftung.

Im Rahmen eines erfindungsgemäßen Verfahrens kann die Bodeneigenschaft ein Bewuchs des Bodens mit einer Pflanze sein, insbesondere mit einer Nutzpflanze, beispielsweise einem Getreide. Anhand des Bewuchses, beispielsweise der Anzahl Halme je Flächeneinheit, der Wuchshöhe und/oder der Färbung kann die Erntemenge und der geeignete Erntezeitpunkt abgeschätzt werden.

Im Rahmen eines erfindungsgemäßen Verfahrens kann die Bodeneigenschaft ein Krankheits- und/oder Schädlingsbefall sein. Durch Quantifizierung von Schadeinflüssen können Gegenmaßnahmen zielgenau geplant werden.

Im Rahmen eines erfindungsgemäßen Verfahrens kann die Bodeneigenschaft ein Gehalt eines Bodenbestandteils sein. Der Bodenbestandteil kann insbesondere eine Bodenart sein, beispielsweise Lehm, Löß, Sand, Kies oder Fels. Die Bodenart und der Bodenaufbau ist ein weiterer wesentlicher Einflussfaktor für das Wachstum von Pflanzen auf dem Boden und für die Aufnahme und Abgabe von Feuchtigkeit.

Der Bodenbestandteil kann weiter insbesondere ein Pflanzenschutzmittel, beispielsweise ein Herbizid, ein Fungizid oder ein Ungeziefervernichtungsmittel, ein Nährstoff sein, beispielsweise Stickstoff, oder ein Dünger zur Steigerung eines Nährstoffanteils, insbesondere ein nicht-mineralischer, ein mineralischer oder ein organischer Dünger sein. Durch die Quantifizierung von natürlichen oder künstlichen gezielt auf den Boden aufgebrachten Hilfsstoffen werden Maßnahmen zur lokalen Bekämpfung von Krankheits- und/oder Schädlingsbefall oder zur Verbesserung der Bodenqualität dokumentiert.

Im Rahmen eines erfindungsgemäßen Verfahrens kann die Wirkung insbesondere über einem Zeitablauf eine Verminderung oder Steigerung der Bodeneigenschaft umfassen. Insbesondere können Maßnahmen der Bewirtschaftung den zukünftigen Bewuchs und damit den Geldwert in einem abschätzbaren Maß erhöhen oder - beispielsweise durch Bodenverdichtung beim Befahren - lokal mindern.

Vorzugsweise umfasst im Rahmen eines erfindungsgemäßen Verfahrens die Bewirtschaftung eine Aussaat, eine Ernte, eine Besonnung, eine Beregnung, eine Düngung, eine Pflanzenschutzmaßnahme und/oder ein Befahren der Fläche. Für solche Maßnahmen können die Wirkungen auf den zukünftigen Bewuchs und damit den Geldwert lokal vorab abgeschätzt werden.

Vorzugsweise wird im Rahmen eines erfindungsgemäßen Verfahrens die Bodeneigenschaft in einer Querschnittsansicht durch die Horizonte dargestellt. Die Darstellung von Werten der Bodeneigenschaft in einer Querschnittsansicht insbesondere durch eine Farbskala erleichtert das intuitive Verständnis der aufgenommenen Daten. Beispielsweise kann auf einem Boden, der erst in großer Tiefe Feuchte enthält, gezielt eine tief wurzelnde Pflanze gesät oder eine an den wechselnden Nährstoffgehalt angepasste Fruchtfolge gewählt werden.

Vorzugsweise wird im Rahmen eines erfindungsgemäßen Verfahrens die Bodeneigenschaft in unterschiedlichen Zoomstufen dargestellt. Insbesondere für kleinere Zoomstufen können aus mehreren für diskrete Stellen der Fläche gemessenen oder berechneten Werten Kennwerte der Bodeneigenschaft, beispielsweise Durchschnitt, Median, Maximum und Minimum bestimmt werden.

Vorzugsweise wird im Rahmen eines erfindungsgemäßen Verfahrens die Bodeneigenschaft in unterschiedlichen Zeitpunkten dargestellt. Insbesondere können Kennwerte der Bodeneigenschaft, beispielsweise Durchschnitt, Median, Maximum und Minimum für die unterschiedlichen Zeitpunkte dargestellt und analysiert werden.

Vorzugsweise werden im Rahmen eines erfindungsgemäßen Verfahrens verschiedene Bodeneigenschaften in gleicher Zoomstufe übereinander gelegt. In einem solchen Verfahren können besonders einfach Korrelationen der Werte verschiedener Bodeneigenschaften entdeckt werden.

Vorzugsweise wird im Rahmen eines erfindungsgemäßen Verfahrens die Bodeneigenschaft berechnet und gemessen und ein berechneter mit einem gemessenen Wert der Bodeneigenschaft verglichen. Der Vergleich ermöglicht die Beurteilung einerseits der Qualität der Berechnung und andererseits der Wirkung einer Maßnahme der Bewirtschaftung.

Vorzugsweise wird im Rahmen eines erfindungsgemäßen Verfahrens die Berechnung anhand des Vergleichs verbessert. Insbesondere kann der Vergleich im Rahmen eines Expertensystems automatisch zur Anpassung von Parametern der Berechnung genutzt werden.

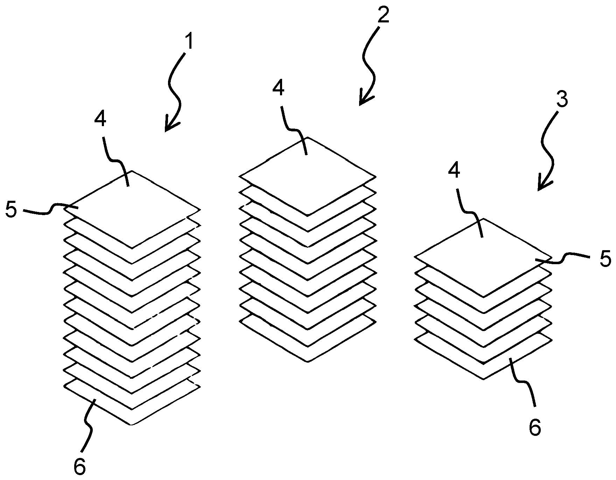

Die Erfindung ist nachstehend von Ausführungsbeispielen näher erläutert. Die Figur zeigt die zeitliche Entwicklung von drei Bodeneigenschaften, nämlich den Nährstoffgehalt 1, die Bodenverdichtung 2 und die Bodenfeuchte 3 eines quadratischen Ausschnitts 4 einer nicht dargestellten landwirtschaftlichen Fläche, wobei jeweils zuoberst der Istzustand 5 und zuunterst der Startzustand 6 der jeweiligen Bodeneigenschaft 1, 2, 3 dargestellt ist.

In einem anderen Ausführungsbeispiel wird im ersten Schritt anhand aus der Vergangenheit für unterschiedliche Zeitpunkte bekannter Messwerte eine "Ausgangskarte" einer Bodeneigenschaft erstellt. In einem weiteren Schritt wird anhand bekannter Wirkungen von durchgeführten Maßnahmen wie Düngung (Steigerung des Nährstoffgehalts), Säen und Pflanzenschutz (Förderung des Pflanzenwachstums, Bodenverdichtung durch Befahren), Pflanzenwachstum (Absinken des Nährstoffgehalts) und Ernten eine "Veränderungskarte" dieser Maßnahmen erstellt. In einem letzten Schritt werden aus der Ausgangskarte und der Veränderungskarte die Istwerte der Bodeneigenschaft in einer "Zustandskarte" berechnet.

### Bezugszeichenliste

- 1: Bodeneigenschaft
- 2: Bodeneigenschaft
- 3: Bodeneigenschaft
- 4: Ausschnitt
- 5: Istzustand
- 6: Startzustand

## Patentansprüche

1. Verfahren zur Bodenkartierung einer landwirtschaftlich bewirtschafteten Fläche, wobei zunächst ein Startzustand (6) einer Bodeneigenschaft (1, 2, 3) ermittelt und dann ausgehend von dem Startzustand (6) anhand einer Wirkung einer Bewirtschaftung der Fläche ein Istzustand (5) der Bodeneigenschaft (1, 2, 3) berechnet wird, ***dadurch gekennzeichnet, dass*** in mehreren vertikal übereinander angeordneten Horizonten der Fläche der Startzustand (6) ermittelt und der Istzustand (5) berechnet wird.

2. Verfahren nach dem vorgenannten Anspruch, ***dadurch gekennzeichnet, dass*** zum Ermitteln des Startzustands (6) Startwerte der Bodeneigenschaft (1, 2, 3) auf diskreten Stellen der Fläche gemessen werden, insbesondere durch Einzelmessungen, durch Messfahrten oder durch Auswerten von Satellitendaten, und der Startzustand (6) zwischen den diskreten Stellen interpoliert und zwischen den diskreten Stellen und einem Rand der Fläche extrapoliert wird.

3. Verfahren nach dem vorgenannten Anspruch, ***dadurch gekennzeichnet, dass*** während der Bewirtschaftung einer der diskreten Stellen die Wirkung für diese Stelle berechnet wird.

4. Verfahren nach einem der vorgenannten Ansprüche, ***dadurch gekennzeichnet, dass*** die Bodeneigenschaft (1, 2, 3) eine Dichte, eine Feuchte und/oder eine Temperatur und/oder ein Geldwert des Bodens und/oder ein Bewuchs des Bodens mit einer Pflanze, ein Krankheits- und/oder Schädlingsbefall und/oder ein Gehalt eines Bodenbestandteils, insbesondere eines Pflanzenschutzmittels und/oder eines Nährstoffs, beispielsweise Stickstoff ist.

5. Verfahren nach einem der vorgenannten Ansprüche, ***dadurch gekennzeichnet, dass*** die Wirkung über einem Zeitablauf eine Verminderung oder Steigerung der Bodeneigenschaft (1, 2, 3) umfasst.

6. Verfahren nach einem der vorgenannten Ansprüche, ***dadurch gekennzeichnet, dass*** die Bewirtschaftung eine Aussaat, eine Ernte, eine Besonnung, eine Beregnung, eine Düngung, eine Pflanzenschutzmaßnahme und/oder ein Befahren der Fläche umfasst.

7. Verfahren nach einem der vorgenannten Ansprüche, ***dadurch gekennzeichnet, dass*** die Bodeneigenschaft (1, 2, 3) in einer Querschnittsansicht durch die Horizonte dargestellt wird.

8. Verfahren nach einem der vorgenannten Ansprüche, ***dadurch gekennzeichnet, dass*** die Bodeneigenschaft (1, 2, 3) in unterschiedlichen Zoomstufen dargestellt wird.

9. Verfahren nach einem der vorgenannten Ansprüche, ***dadurch gekennzeichnet, dass*** die Bodeneigenschaft (1, 2, 3) zu unterschiedlichen Zeitpunkten dargestellt wird.

10. Verfahren nach einem der vorgenannten Ansprüche, ***dadurch gekennzeichnet, dass*** Bodeneigenschaften (1, 2, 3) in gleicher Zoomstufe übereinander gelegt werden.

11. Verfahren nach einem der vorgenannten Ansprüche, ***dadurch gekennzeichnet, dass*** die Bodeneigenschaft (1, 2, 3) berechnet und gemessen und ein berechneter mit einem gemessenen Wert der Bodeneigenschaft (1, 2, 3) verglichen wird.

12. Verfahren nach dem vorgenannten Anspruch, ***dadurch gekennzeichnet, dass*** die Berechnung anhand des Vergleichs verbessert wird.

## Claims

1. A method for soil mapping of a managed agricultural area, wherein initially, an initial state (6) for a soil property (1, 2, 3) is determined and then, starting from the initial state (6), an actual state (5) of the soil property (1, 2, 3) is calculated with the aid of an effect of a management action for the area, ***characterized in that*** the initial state (6) is determined and the actual state (5) is calculated in a plurality of vertically superimposed horizontal zones of the area.

2. The method according to the preceding claim, ***characterized in that*** in order to determine the initial state (6), initial values for the soil property (1, 2, 3) are measured at discrete positions of the area, in particular by individual measurements, by measurement runs or by the analysis of satellite data, and the initial state (6) is interpolated between the discrete positions and extrapolated between the discrete positions and an edge of the area.

3. The method according to the preceding claim, ***characterized in that*** during the management of one of the discrete positions, the effect for this position is calculated.

4. The method according to one of the preceding claims, ***characterized in that*** the soil property (1, 2, 3) is a density, a moisture content and/or a temperature and/or a financial value of the soil and/or of plant cover on the soil, an infestation with a disease and/or pest, and/or a content of a soil component, in particular of a plant protection agent and/or a nutrient, for example nitrogen.

5. The method according to one of the preceding claims, ***characterized in that*** the effect over a passage of time comprises a reduction or increase in the soil property (1, 2, 3).

6. The method according to one of the preceding claims, ***characterized in that*** the management is a sowing action, a harvesting action, an exposure to sunlight, an irrigation action, a fertilisation action, a plant protection measure and/or a navigation of the area.

7. The method according to one of the preceding claims, ***characterized in that*** the soil property (1, 2, 3) is depicted in a cross sectional view through the horizontal zone.

8. The method according to one of the preceding claims, ***characterized in that*** the soil property (1, 2, 3) is depicted in different levels of zoom.

9. The method according to one of the preceding claims, ***characterized in that*** the soil property (1, 2, 3) is depicted at different points in time.

10. The method according to one of the preceding claims, ***characterized in that*** the soil properties (1, 2, 3) are superimposed one on top of the other with the same level of zoom.

11. The method according to one of the preceding claims, ***characterized in that*** the soil property (1, 2, 3) is calculated and measured and a calculated value is compared with a measured value for the soil property (1, 2, 3).

12. The method according to the preceding claim, ***characterized in that*** the calculation is improved with the aid of the comparison.

## Revendications

1. Procédé de cartographie du sol d'une surface d'exploitation agricole, un état initial (6) d'une propriété de sol (1, 2, 3) étant d'abord déterminé et un état réel (5) de la propriété de sol (1, 2, 3) étant ensuite calculé à partir de l'état initial (6) à l'aide d'une action d'une exploitation de la surface, ***caractérisé en ce que**,* dans plusieurs horizons de la surface disposés verticalement l'un au-dessus de l'autre, l'état initial (6) est déterminé et l'état réel (5) est calculé.

2. Procédé selon la revendication précédente, ***caractérisé en ce que**,* pour déterminer l'état initial (6), des valeurs initiales de la propriété de sol (1, 2, 3) sont mesurées en des endroits discrets de la surface, en particulier par l'intermédiaire de mesures individuelles, de parcours de mesure ou d'analyses de données satellitaires, et l'état initial (6) est interpolé entre les endroits discrets et extrapolé entre les endroits discrets et un bord de la surface.

3. Procédé selon la revendication précédente, ***caractérisé en ce que**,* pendant l'exploitation d'un des endroits discrets, l'action pour cet endroit est calculée.

4. Procédé selon une des revendications précédentes, ***caractérisé en ce que*** la propriété de sol (1, 2, 3) est une densité, une humidité et/ou une température et/ou une valeur pécuniaire du sol et/ou une croissance d'une plante sur le sol, une infestation pathologique et/ou parasitaire et/ou une teneur d'un composant du sol, en particulier d'un produit phytosanitaire et/ou d'un nutriment, par exemple d'azote.

5. Procédé selon une des revendications précédentes, ***caractérisé en ce que*** l'action sur un laps de temps inclut une diminution ou une augmentation de la propriété de sol (1, 2, 3).

6. Procédé selon une des revendications précédentes, ***caractérisé en ce que*** l'exploitation inclut un semis, une récolte, un apport de lumière, une aspersion, une fertilisation, une mesure phytosanitaire et/ou un passage de véhicule sur la surface.

7. Procédé selon une des revendications précédentes, ***caractérisé en ce que*** la propriété de sol (1, 2, 3) est représentée dans une vue en coupe à travers l'horizon.

8. Procédé selon une des revendications précédentes, ***caractérisé en ce que*** la propriété de sol (1, 2, 3) est représentée dans différents niveaux de zoom.

9. Procédé selon une des revendications précédentes, ***caractérisé en ce que*** la propriété de sol (1, 2, 3) est représentée à différents moments.

10. Procédé selon une des revendications précédentes, ***caractérisé en ce que*** des propriétés de sol (1, 2, 3) à niveau de zoom identique sont superposées.

11. Procédé selon une des revendications précédentes, ***caractérisé en ce que*** la propriété de sol (1, 2, 3) est calculée et mesurée et une valeur calculée de la propriété de sol (1, 2, 3) est comparée à une valeur mesurée.

12. Procédé selon la revendication précédente, ***caractérisé en ce que*** le calcul est amélioré à l'aide de la comparaison.
